# EUROPEAN PATENT APPLICATION

(11) **EP 4 703 826 A1**
(43) Date of publication of application: **04.03.2026**
(21) Application number: 24197690.1
(22) Date of filing: 30.08.2024
(51) Int. Cl.: G05B 23/02

(54) **COMPUTER-IMPLEMENTED METHOD AND APPARATUS FOR MONITORING AN INDUSTRIAL SYSTEM**

(71) Applicant: Siemens Aktiengesellschaft, 80333 München (DE)
(72) Inventor: Bruhn, Cecilia Margareta, 80807 München (DE); Mittelstädt, Sebastian, 89423 Gundelfingen a.d. Donau (DE)
(74) Representative: Siemens Patent Attorneys

(57) **Abstract**

Apparatus and computer-implemented method for monitoring an industrial system, comprising:
- receiving (S1) a multivariate sensor data signal (SD) comprising a plurality of components, each component com-prising data collected by different sensors monitoring the system,
- inputting (S2) the sensor data signal (SD) into a first ML model (M1) the first ML model (M1) outputting the sensor data signal (SD) divided into a sequence of first segments (Seg1), and assigning a prediction (P1) to each of the first segments,
- inputting (S3) the sensor data signal (SD) into at least one second ML model (M2), each of the second ML models (M2) outputting the sensor data signal divided into a sequence of second segments (Seg2), and assigning a second prediction (P2) to each second segment,
- determining (S4) a sequence of composed segments (Pc) of the sensor data signal by composing the first sequence of segments (Seg1) and the at least one second sequence of segments (Seg2) such that each adjacent composed segments show a different combination of the first prediction (P1) in the first sequence of segments (Seg1) and second pre-diction (P2) in each of the second sequences of segments (Seg2) at the same point in time, and
- assigning (S5) a composed prediction (Pc) to each of the composed segments (Seg3),
- adding (S1) to a prediction ruleset (40) a rule (R1,... , Rm), the rule comprising an indication of the combined first ML model and the second ML model, and the composed predictions (Pc) assigned to the respective composed segments (Seg3),
- establishing (S7) a composed model (Mc) comprising the first (M1) and the at least one second ML model (M2), which outputs segments and predictions according to the rules of the ruleset (40), and
- applying (S8) the composed model (Mc) to further sensor data signals received from the system.

## Description

### Field of the Invention

The present disclosure relates to an apparatus and computer-implemented method for monitoring an industrial system by analyzing multivariate sensor data signal comprising a plurality of components, each component comprising data collected by different sensors monitoring with different machine learning models.

### Background

Sensor data collected over time, i.e., in form of time series and conveyed as data signal is present in many applications, machines and equipment, especially in an industrial environment. By monitoring the behaviour of the sensor data, machine failures can be predicted before they happen. This in turn results in shorter downtimes of the machine and more efficient maintenance planning. Time series of sensor data are also collected for controlling quality of a product during manufacturing.

Constant monitoring is very time consuming for a human, but there are data driven methods to support and automate this process. Often, the timeseries signal is segmented into different segments by various algorithms. For example, one type of "regular operation" belongs to one type of segment and "anomalous behaviour" to another type of segment. The different types of segments show data with different courses of time. After such a segmentation has been performed it is easier for the human to recognize faulty behaviour and distinguish different types of regular operation from each other. The algorithms are mainly machine learning models trained by sensor data of a similar.

Failures can have very different types of characteristics; some happen very abruptly, and some develop gradually over an extended period of time. Hence, they will express themselves very differently in the sensor signals. It is often very difficult to create one single machine learning model that catches both characteristics, but one algorithm or model is required that models the short-time behaviour and another algorithm that models the long-time behaviour.

For some use cases it is necessary to combine different model types. For example, an unsupervised ML method needs to be combined with a classification model to be able to monitor whether the classification model can be trusted to predict a class. Consider that the classification model was trained on operation mode X and Y, but it has never seen data generated during a new operation mode Z of a machine. How should it be used to predict the new operation mode Z - but it will attribute it to some extend to X or Y. An unsupervised model or anomaly detection model can, however, determine if it has seen such an operation mode during its training phase. If not, it would raise an anomaly. Combined with the classifier it could indicate that the result of the classifier must be "overwritten" or suppressed.

The problem then arises how to combine several models that take all these different characteristics into account and create a new Model - since the output dimensions of different model types and classes are very different. One single model could be retrained with new data or different settings, but this could result in catastrophic forgetting, where the model could forget the past behaviour of the machine.

There are algorithms, like Learn++ algorithm, that are capable of learning additional information from new data without suffering from catastrophic forgetting and accommodate new classes from the new data. However, this algorithm only works for classification models, that is, supervised algorithms. Additionally, the algorithm requires a complicated software structure and is not interpretable.

Active Learning, which is a case of semi-supervised learning, is a concept where the model can query a user to label some of the training data. It will then train a supervised model on this labelled subset. This technique allows for a user's input on the data, but not on the result of the model. Furthermore, it is not clear how to avoid the case of catastrophic forgetting if a completely new data set is introduced to an already trained model.

Therefore, it is an object of the present invention to provide a method and apparatus which provides combined model generating a prediction taking into account the predictions of different models even if the models provide predictions of different dimension.

### Brief Summary of the Invention

This object is solved by the features of the independent claims. The dependent claims contain further embodiment of the invention.

A first aspect concerns a computer-implemented method for monitoring an industrial system, comprising:
- receiving a multivariate sensor data signal comprising a plurality of components, each component comprising data collected by different sensors monitoring the system,
- inputting the sensor data signal into a first ML model, the first ML model outputting the sensor data signal divided into a sequence of first segments, and assigning a prediction to each of the first segments,
- inputting the sensor data signal into at least one second ML model, each of the second ML models outputting the sensor data signal divided into a sequence of second segments, and assigning a second prediction to each second segment,
- determining a sequence of composed segments of the sensor data signal by composing the first sequence of segments and the at least one second sequence of segments such that each adjacent composed segments show a different combination of the first prediction in the first sequence of segments and second prediction in each of the second sequences of segments at the same point in time, and
- assigning a composed prediction to each of the composed segments,
- adding to a prediction ruleset a rule comprising an indication of the composed first ML model and the second ML model and the composed predictions assigned to the combination of first and second prediction in the respective composed segments,
- establishing a composed model comprising the first and the at least one second ML model, which outputs segments and predictions according to the rules of the ruleset, and
- applying the composed model to further sensor data signals received from the system.

A second aspect of the invention concerns an apparatus for monitoring an industrial system, comprising a data interface, a composing unit and an application unit. The data interface is configured to receive a multivariate sensor data signal comprising a plurality of components, each component collected by different sensors monitoring the system.

The composing unit is configured to
- input the sensor data signal into a first ML model, the first ML model outputting the sensor data signal divided into a sequence of first segments, and assigning a prediction to each first segment,
- input the sensor data signal into at least one second ML model, each of the at least one second ML models outputting the sensor data signal divided into a sequence of second segments, and assigning a second prediction to each second segment,
- determine a sequence of composed segments of the sensor da-ta signal by composing the first sequence of segments and the at least one second sequence of segments such that each adjacent composed segments show a different combination of the first prediction in the first sequence of segments and second prediction in each of the second sequences of segments at the same point in time and assigning a composed prediction to each of the composed segments,
- add to a prediction ruleset a rule comprising an indication of the composed first ML model and the second ML model and the composed predictions assigned to the combination of first and second prediction in the respective composed segments, and
- establish a composed model comprising the first and the at least one second ML model, which outputs segments and predictions according to the rules of the ruleset.

The application unit configured to apply the composed model to further sensor data signals received from the system.

A third aspect of the invention concerns a computer program product directly loadable into an internal memory of at least one digital computer, comprising software code portions for performing the steps of the computer-implemented method when said product is run on said at least one digital computer.

Advantageously, the composed model avoids of catastrophic interference or catastrophic forgetting of any of the models because the composed model comprises the first ML model and each second model remain in unchanged form. The composed model allows the combination of different individual model types as, e.g., an unsupervised ML model, a classification model, a specific anomaly detection model and further on. Thus, the composed model is very flexible with respect to the ML models which can be combined with and thus very flexible with respect to possible application scenarios. The composed model can be established with low adaption effort and at low cost.

### Description of Embodiments

In an embodiment the ruleset is dynamically supplemented by a new rule when a new combination of the first prediction and the second prediction is output by the first model and the second model.

In an embodiment the ruleset is dynamically supplemented by a new rule when an additional ML model which is different to any of the first ML model and second ML models is applied to the multivariate sensor data signal of the industrial system.

This enables flexible extension of the composed model.

In an embodiment the rule comprises an instruction assigned to at least one of the composed predictions and the instruction initiates an action at the monitored industrial system.

Thus, the composed method provides direct feedback to the monitored industrial system.

In an embodiment the ule comprises an interpretation assigned to at least one of the composed predictions and the interpretation is output to a user interface.

Thus, operation personnel can be guided by the interpretation, e.g., providing information on a ground truth causing the composed prediction, or providing information on settings of the monitored system, which should be changed.

In an embodiment the composed predictions are assigned to the composed segments by a user provided via the user interface.

By allowing the user, especially a domain expert, to consolidate the composed prediction, it is possible to introduce new unseen classes in the composed model and learn these as well as correct wrongly or badly labelled composed segments.

In an embodiment the rule comprises a temporal length of the composed segment, and the composed model assigns that composed prediction to a combination of first and second predictions which was assigned to the composed segment with the highest temporal length, if more than one of the composed segments combining the same first and second prediction but having assigned a different composed prediction.

This enables conflict handling in case the different composed predictions have been assigned to the same combination of first prediction and second prediction of the combined first model and second model.

In an embodiment the composed model is a ML model trained to output composed segments and the respective composed predictions according to at least one rule of the ruleset.

Such a composed model can handle complex monitoring setups having sensor data signal with a multitude of components and/or a multitude of different model types.

In an embodiment the composed model is an analytic function which determines the composed segments and the respective composed predictions by comparing first segments and second segments according to at least one rule of ruleset.

Such a composed system can be established with few additional efforts with respect to processing power and complexity. The resulting composed predictions are explainable in contrast untransparent composed predictions generated by a ML model with blackbox.

In an embodiment the first ML model and the second ML model are trained for analysing different subsets of components of the sensor data signal, especially a subset having a different number of and/or a different selection of components of the sampled sensor data signal.

This provides a flexible generation of the composed model wherein the combined models analyse only different subsets of components of the sensor data signal.

In an embodiment the first ML model and the second ML model are different types of ML models.

This allows a combination of different individual model types like unsupervised ML models, classification models, anomaly detection model, and furthermore.

### Brief description of the drawings

The invention will be explained in more detail by reference to accompanying figures. Similar objects will be marked by the same reference signs.
- Figure 1: shows an embodiment of the inventive method as flow diagram.
- Figure 2: schematically illustrates an example for determining a sequence of composed segments and assigning composed predictions depending on a sequence of first segments and a sequence of second segments according to the inventive method.
- Figure 3: schematically illustrates examples of ruleset of rules determined for a composed model according to the inventive method.
- Figure 4: schematically illustrates an embodiment of the inventive apparatus.

It is noted that in the following detailed description of embodiments, the accompanying drawings are only schematic, and the illustrated elements are not necessarily shown to scale. Rather, the drawings are intended to illustrate functional units and the co-operation of the functional units. Here, it is to be understood that any connection or coupling of functional units, modules, components or other physical or functional elements could also be implemented by a direct connection or an indirect connection coupling element, e.g., via one or more intermediate elements. A connection or a coupling of entities or components can for example be implemented by a wire-based, a wireless connection and/or a combination of a wire-based and a wireless connection. Functional modules can be implemented by dedicated hardware, e.g., processor, firmware or by software, and/or by a combination of dedicated hardware and firmware and software. It is further noted that each functional modules described for an apparatus can perform a functional step of the related method and vice versa.

In the following the expressions algorithm, machine learning model or ML model or model are used as synonyms.

### Description of Examples

In an industrial environment or system one or multiple sensors monitor different parameters of machines, like electrical drives or pumps, device and tools or monitor a manufacturing process over time. A sensor data signal comprising these one or several sensor data timeseries as components is used to evaluate the status of the machine or system. Different types of machine learning models are trained to evaluate the sensor data signal as a whole or to evaluate a subset of components of the data sensor signal to output a prediction with respect to the status of the monitored system. For instance, a classification model is trained to predict a two or more modes of operation the system like normal mode A or normal mode B or different anormal states.

For some use cases it is necessary to combine different model types such as an unsupervised model with classification models to be able to figure out if the classification model can be trusted to predict a class. For instance, the classification model was trained on operation mode A and B, but it has never seen a new operation mode C of a machine. How should it be used to predict the new operation mode C. If the sensor data signal shows a course which is characteristic for operation mode C the classification model will attribute it to some extend to operation mode A or B. However, an unsupervised ML model or anomaly detection ML model can determine if such an operation mode was included in the sensor data signal during the training phase. If this operation mode was not included in the sensor data signal during the training phase, the anomaly model would output an anomaly. Combined with the classifier model it could indicate that the result of the classifier model must be "overwritten" or suppressed.

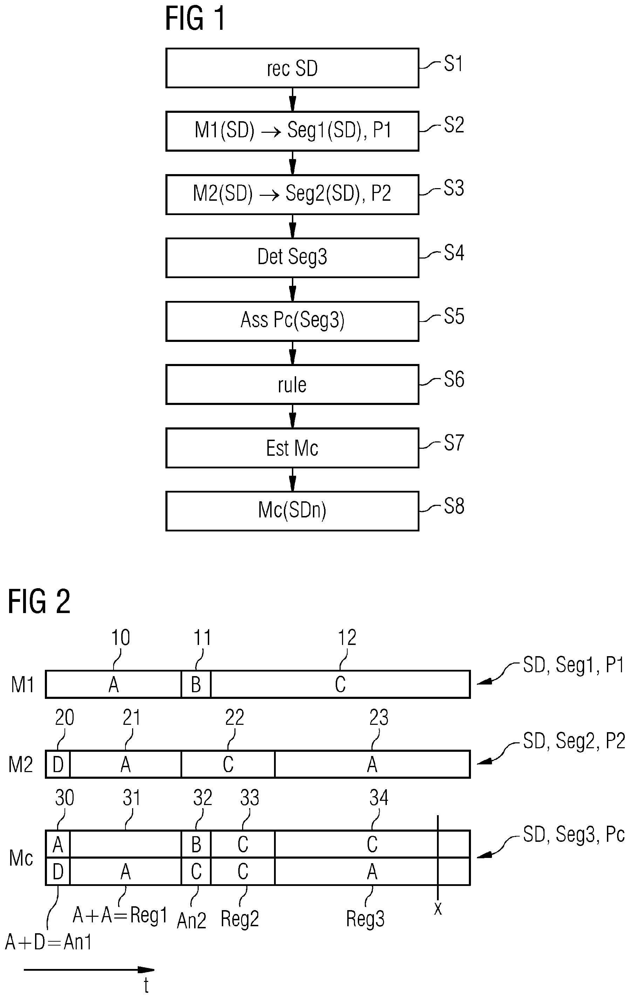

The proposed computer-implemented method for monitoring the industrial system is depicted as a flow diagram in Fig. 1 and described in the following. Fig. 2 shows the respective a sensor data signal.

In a first step S1, a multivariate sensor data signal SD is received comprising a plurality of components, each component comprising data collected by different sensors monitoring the system. The sensor data signal SD is input into a first ML model M1 which outputs the sensor data signal divided into a sequence of first segments Seg1 and a prediction P1 assigned to each of the first segments Seg1, see S2. The sensor data signal SD is input into at least one second ML model, each of the second ML models outputting the sensor data signal SD divided into a sequence of second segments Seg2 and assigning a second prediction P2 to each second segment Seg2, see S3.

The first ML model M1 and the second ML model M2 are different types of ML models. The first ML model 1 and/or the second ML model M2 can also be trained for analyzing different subsets of components of the sampled sensor data signal, especially a subset having a different number of and/or a different selection of components of the sensor data signal. The first ML model M1 and second ML model M2 can be any combination with respect to the type of the model and the model analyzing different subsets of components of the sensor data signal. The industrial system may comprise more than one subsystem, each subsystem outputting a specific sensor data signal and each of the first ML model M1 and second ML model M2 are monitoring the sensor data signal of a different subsystem at the same time. Further, the first and/or second ML model M1, M2 can be trained to analyze a sensor data signal collected at the same point in time comprising a different selection of components.

A sequence of composed segments Seg3 of the sensor data signal SD is determined by composing the first sequence of segments Seg1 and the at least one second sequence of segments Seg2 such that each adjacent composed segments show a different combination of the first prediction P1 in the first sequence of segments Seg1 and second prediction in each of the second sequences of segments Seg2 at the same point in time, see S4, see S4. A composed prediction P3 is assigned to each of the composed segments Seg3, see S5. A rule is added to a prediction ruleset, a rule comprising an indication of the composed first ML model M1 and the second ML model M2, and the composed predictions assigned to the combination of first and second prediction in the respective composed segments, Seg3, see S6.

A composed model Mc is established comprising the first ML model M1 and the at least one second ML model M2, which outputs segments Seg 3 and composed predictions Pc according to the rules of the ruleset, see S7. The composed model Mc is applied to further sensor data signals Sn received from the system2, see S8.

The ruleset is dynamically supplemented by a new rule when a new combination of the first prediction Pred 1 and the second prediction Pred 2 is output by the first model M1 and the second model M2. The ruleset is also supplemented by a new rule when an additional ML model which is different to any of the first ML model M1 and second ML models M2 is applied to the multivariate sensor data signal SD and the additional ML model is handled similar to one of the second ML models. Thus, the composed model can be a combination of two or more different ML models which receive the same sensor data signal as input.

The composed model Mc learns which combinations of segments from the different first and second models M1, M2 are present in the sensor data signal SD at the same times and what they mean by matching the time of the combination with the time of the respective predictions P1, P2. These combinations are given different interpretations, i.e., the composed predictions Pc. The composed model Mc is a ML model trained to output composed segments Seg3 and the respective composed predictions Pc according to at least one rule of the ruleset. Accordingly, the composed ML model is trained with labelled composed segments to automatically assign the composed predictions Pc.

In another embodiment the composed model Mc is an analytic function which determines the composed segments Seg3 and assigns the respective composed predictions Pc by comparing first segments Seg 1 and second segments Seg2 according to at least one rule of ruleset. Accordingly, the composed predictions P3 is manually programmed through coding.

Fig.2 shows the output of two different ML models M1 and M2 for one sensor data signal SD, both of which captures different aspects of the time series. The sequence of first segments Seg1 is output by the first ML model M1 when the sensor data signal SD was input. The sequence of first segments Seg1 comprises segments 10, 11, 12 with a first prediction A assigned segment 10, another first prediction B assigned segment 11 and first prediction C assigned segment 12.

Similar, the sequence of second segments Seg2 is output by the second ML model M2 when the sensor data signal SD was input. The sequence of second segments Seg2 comprises segments 20, 21, 22 and 23 with a first prediction D assigned segment 20, another second prediction A assigned to segment 21 and 23 and a second prediction C assigned segment 22. The output of first model M1 and second model M2 are combined in the composed model Mc. The sequence of composed segments Seg3 output by the composed model Mc comprises segments 30, 31, 32, 33, 34. Each adjacent segment shows a different combination of first and second predictions at the same point in time. The composed model Mc assigned to segment 30 a composed prediction An1, e.g., meaning that this the sensor data signal in this segment is predicted to show the monitored system in an anomaly of type 1 according to a respective rule.

A composed prediction, here An1, Reg1, An2, Reg2, Reg3 are assigned to all segments in the sequence of composed segments Seg3 according to one of the rules of the ruleset.

The composed model Mc is, hence, a combination of the two models M1 and M2. Consider time point X, which has been labeled for instance as "Regular Operation 3" Reg3. The rule the composed model Mc has learned is that first prediction C and second prediction A results in composed prediction "Regular Operation 3" Reg3.

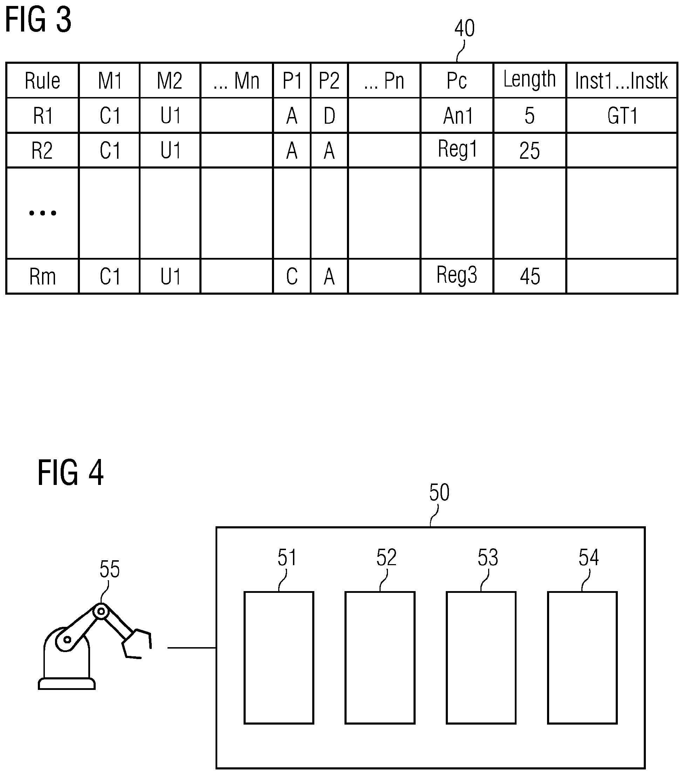

Fig. 3 shows an exemplary embodiment of a ruleset 40. The ruleset 40 comprises several rules R1, R2,..., Rm. The ruleset is shown here in form of a list with each line comprising one rule. The ruleset can be implemented in any other form and is not limited to a list. Each rule R1,..., Rm comprises an indication of the considered the first model M1 and second models M2,..., Mn and the predictions P1,..., Pn assigned to a segment at the same point in time by each of the first model M1 and second models M2,..., Mn and the resulting composed prediction Pc. Optionally, the rule comprises a temporal length of the composed segment which is used to determine the composed prediction in case there are different composed predictions for the same combination of first and second predictions P1, Pn. The temporal length indicates the time of overlapping of the first and second prediction.

The rule further comprises one or several instruction Inst1,..., Instk. The instruction initiates an action directly at the industrial system if the respective rule is applied. The rule may comprise an interpretation assigned to at least one of the composed predictions and the interpretation is output to a user interface. This interpretation guides a user, e.g., an operator of the monitored industrial system to perform activities according to the predicted state of the system. For instance, if an anomaly detection model predicts an anomaly and a classification model predicts the system to be in a new normal operation mode then the composed prediction is normal operation 2 and outputs an instruction to the system to continue operation and suppress the detected anomaly.

A new rule is added to the ruleset whenever a new combination of predictions of the first and second ML model M1,..., Mn is identified. The composed predictions are assigned to the composed segments by a user provided via the user interface. The user is preferably a domain expert of the monitored system. Thus, the ruleset grows dynamically over time.

Fig.4 depicts an apparatus 50 configured to perform the described method. The apparatus 50 comprises more than one processor. The apparatus comprises a data interface 51, a composing unit 52 and an application unit 53 and a user interface 54.

The data interface is configured to receive a multivariate sensor data signal comprising a plurality of components, each component collected by different sensors monitoring a system 55.

The composing unit 52 is configured to input the sensor data signal into both the first ML model and the second ML model and to output the sensor data signal divided into a sequence of first segments and second segments and assigning a prediction to each first and each second segment. It is further configured to determine a sequence of composed segments of the sensor data signal by composing the first sequence of segments and the at least one second sequence of segments such that each adjacent composed segments show a different combination of the first prediction in the first sequence of segments and second prediction in each of the second sequences of segments at the same point in time and assigning a composed prediction to each of the composed segments. The composing unit 52 adds to a prediction ruleset a rule comprising an indication of the composed first ML model and the second ML model and the composed predictions assigned to the respective composed segments. The composing unit 52 establishes a composed model comprising the first and the at least one second ML model, which outputs segments and predictions according to the rules of the ruleset.

The application unit is configured to apply the composed model to further sensor data signals received from the industrial system.

By combining different ML models, different aspects of the past behavior of the monitored system, e.g., machine, will not be forgotten when new data comes along. Hence, the composed model will not fall into the trap of catastrophic forgetting. The user can consolidate the result, i.e., the sequence of composed segments and the assigned composed predictions. The composed model generalizes to new sensor data without the need of saving and retraining on the old data. The method and apparatus allow the combination of different individual model types like unsupervised, classification, anomaly detection models and is therefore flexible in application.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Computer-implemented method for monitoring an industrial system, comprising:
- receiving (S1) a multivariate sensor data signal (SD) comprising a plurality of components, each component com-prising data collected by different sensors monitoring the system,
- inputting (S2) the sensor data signal (SD) into a first ML model (M1) the first ML model (M1) outputting the sensor data signal (SD) divided into a sequence of first segments (Seg1), and assigning a prediction (P1) to each of the first segments,
- inputting (S3) the sensor data signal (SD) into at least one second ML model (M2), each of the second ML models (M2) outputting the sensor data signal divided into a sequence of second segments (Seg2), and assigning a second prediction (P2) to each second segment,
- determining (S4) a sequence of composed segments (Pc) of the sensor data signal by composing the first sequence of segments (Seg1) and the at least one second sequence of segments (Seg2) such that each adjacent composed segments show a different combination of the first prediction (P1) in the first sequence of segments (Seg1) and second prediction (P2) in each of the second sequences of segments (Seg2) at the same point in time, and
- assigning (S5) a composed prediction (Pc) to each of the composed segments (Seg3),
- adding (S1) to a prediction ruleset (40) a rule (R1, ..., Rm), the rule comprising an indication of the combined first ML model and the second ML model, and the composed predictions (Pc) assigned to the respective composed segments (Seg3),
- establishing (S7) a composed model (Mc) comprising the first (M1) and the at least one second ML model (M2), which outputs segments and predictions according to the rules of the ruleset (40), and
- applying (S8) the composed model (Mc) to further sensor data signals received from the system.

2. Computer-implemented method according to claim 1, wherein the ruleset is dynamically supplemented by a new rule when a new combination of the first prediction and the second prediction is output by the first model and the second model.

3. Computer-implemented method according to claim 1, wherein the ruleset is dynamically supplemented by a new rule when an additional ML model which is different to any of the first ML model and second ML models is applied to the multivariate sensor data signal of the industrial system.

4. Computer-implemented method according to any of the pre-ceding claims, wherein the rule comprises an instruction assigned to at least one of the composed predictions and the instruction initiates an action at the industrial system.

5. Computer-implemented method according to any of the pre-ceding claims, wherein the rule comprises an interpretation assigned to at least one of the composed predictions and the interpretation is output to a user interface.

6. Computer-implemented method according any of the preceding claims, wherein the composed predictions are assigned to the composed segments by a user provided via the user interface.

7. Computer-implemented method according any of the preceding claims, wherein the rule comprises a temporal length of the composed segment, and
the composed model assigns that composed prediction to a combination of first and second predictions which was as-signed to the composed segment with the highest temporal length, if more than one of the composed segments combining the same first and second prediction but having as-signed a different composed prediction.

8. Computer-implemented method according any of the preceding claims, wherein the composed model is a ML model trained to output composed segments and the respective composed predictions according to at least one rule of the ruleset.

9. Computer-implemented method according any of the preceding claims, wherein the composed model is an analytic function which determines the composed segments and the respective composed predictions by comparing first segments and second segments according to at least one rule of ruleset.

10. Computer-implemented method according any of the preceding claims, wherein the first ML model and/or the second ML model are trained for analysing different subsets of components of the sampled sensor data signal, especially a subset having a different number of and/or a different se-lection of components of the sensor data signal.

11. Computer-implemented method according any of the preceding claims, wherein the first ML model and the second ML model are different types of ML models.

12. Apparatus for monitoring an industrial system comprising a data interface, a composing unit and an application unit, wherein the data interface is configured to
- receive a multivariate sensor data signal (SD) comprising a plurality of components, each component comprising data collected by different sensors monitoring the system,
the composing unit is configured to
- input the sensor data signal into a first ML model, the first ML model outputting the sensor data signal divided into a sequence of first segments, and assigning a prediction to each first segment,
- input the sensor data signal into at least one second ML model, each of the at least one second ML models outputting the sensor data signal divided into a sequence of second segments, and assigning a second prediction to each second segment, and
- determine a sequence of composed segments of the sensor data signal by composing the first sequence of segments and the at least one second sequence of segments such that each adjacent composed segments show a different combination of the first prediction in the first sequence of segments and second prediction in each of the second sequences of segments at the same point in time and assigning a composed prediction to each of the composed segments,
- add to a prediction ruleset a rule comprising an indication of the composed first ML model and the second ML model and the composed predictions assigned to the respective composed segments,
- establish a composed model comprising the first and the at least one second ML model, which outputs segments and predictions according to the rules of the ruleset, and
the application unit is configured to
- apply the composed model to further sensor data signals received from the industrial system.

13. A computer program product directly loadable into an in-ternal memory of at least one digital computer, comprising software code portions for performing the steps of claims 1-11 when said product is run on said at least one digital computer.
